# EUROPEAN PATENT SPECIFICATION

(11) **EP 1 540 231 B1**
(45) Date of publication and mention of the grant of the patent: **08.10.2008**
(21) Application number: 03793842.0
(22) Date of filing: 22.07.2003
(51) Int. Cl.: F16L 33/01, F16L 33/00

(54) **END FITTING FOR HOSE**
ENDANSCHLUSSSTÜCK FüR EINEN SCHLAUCH
EMBOUT POUR TUYAU

(30) Priority: 03.09.2002 GB 0220395
(43) Date of publication of application: 15.06.2005
(73) Proprietor: AFLEX HOSE LIMITED, Sowerby Bridge, Halifax HX6 3BW (GB)
(72) Inventor: SETON-ANDERSON, Roderick, Aflex Hose Limited, Sowerby Bridge, Halifax HX6 3BW (GB)
(74) Representative: Neilson, Martin Mark
(86) International application number: PCT/GB2003/003164
(87) International publication number: WO 2004/023023

(56) References cited:
- EP-A- 0 292 165
- EP-A- 0 707 170
- GB-A- 969 956
- GB-A- 2 084 679

## Description

The present invention relates to a method of securing an end fitting to a flexible hose or pipe, in particular a plastic hose, and to an assembly comprising a plastic lined hose having an end fitting secured thereto.

The type of end fitting to which this invention relates primarily, thought not exclusively, is that know as "Triclover", "Triclamp" or "clamp type" as defmed by British Standard BS 4825 Part 3. This type of end fitting is widely used in biochemical process plants and laboratories where the ultimate in hygienic operation is required.

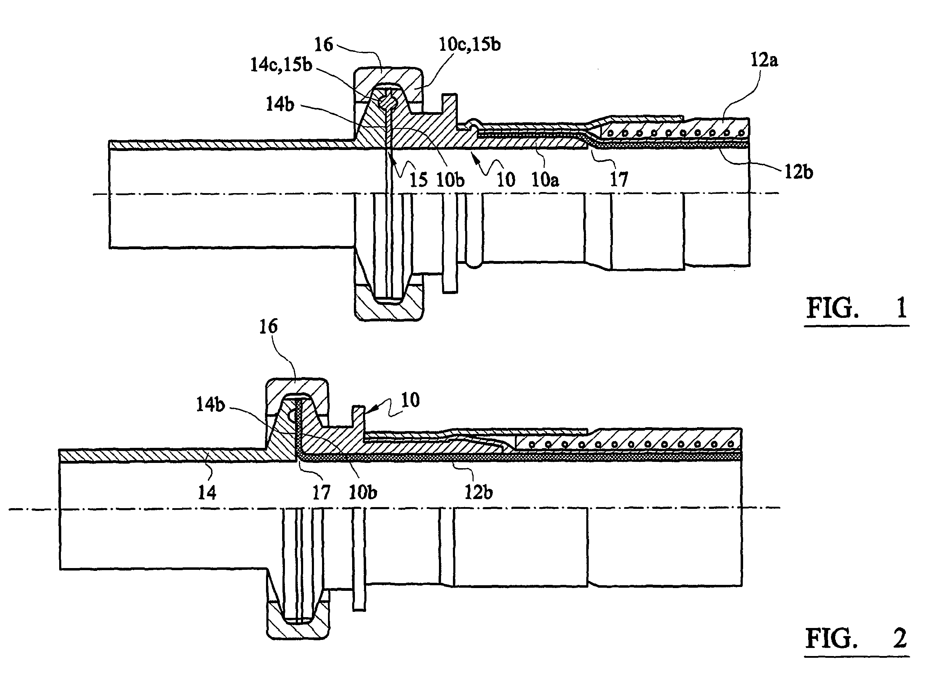

Conventionally, an end fitting of this type would be secured to the end of a pipe or hose to provide a means of connection to other pipes and hoses. One way in which this is currently done is to insert an end fitting within the hose end and align it with an identical end fitting, clamping the two components together with a rubber seal located between the sealing faces of the two end fittings. This rubber seal conventionally includes annular "beads" on each face which seat within corresponding machined grooves in the steel end fittings, these beads providing an aid to concentric location during assembly. This systemhas the disadvantage that the fitting creates an entrapment zone for fluid passing through the fitting, such as renders hygienic operation impossible. See Figure 1 of the accompanying drawings.

It is also known to attach such an end fitting to say a fluorocarbon or PTFE plastic lined hose in such a way that the plastic liner is passed through the bore of the fitting, then flared out to form a sealing face, thus ensuring continuity of hygienic fluid flow through the fitting, and to protect the fitting from any corrosive effect the fluid may have on the material from which the fitting itself is made. See Figure 2 of the accompanying drawings.

However, there is a disadvantage in this second type of procedure in that, because it eliminates the rubber seal and hence the "beads", concentric connection of the two end fittings is relatively difficult and also requires a much greater clamping force for form a seal with the fluorocarbon plastic sealing face than would otherwise be required with a softer, more resilient, rubber seal. The clamping system used conventionally is not designed to provide such a high clamping force. Also, an entrapment zone is created at the point where the PTFE liner goes around the corner of the end fitting into the flared sealing face.

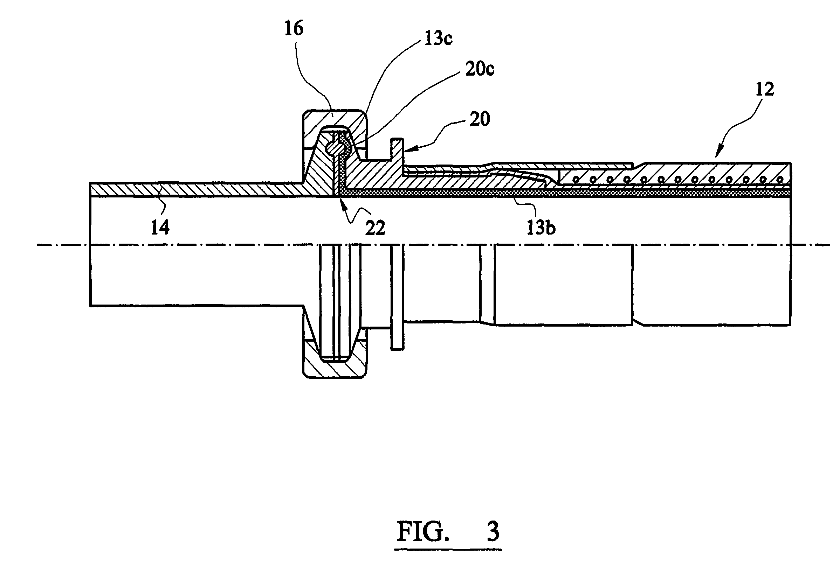

Our European patent publication number EP 0707170 disclosed a system which is easily aligned concentrically and which can be sealed effectively using conventional clamping techniques. Furthermore, this system eliminates entrapment zones. See Figure 3 of the accompanying drawings.

The latter system suffered from the disadvantage, however, that a rubber seal was still required to form a seal, so that any fluid passing through which was not compatible with rubber would create problems.

It is not practical to substitute a rubber seal with a PTFE seal (which has much better chemical resistance) since this design of seal is very expensive, not readily available, and notoriously unreliable in service.

The aim of the present invention, therefore, is to provide a Triclover end fitting design attached to a PTFE lined hose which overcomes the problems referred to above.

According to a first aspect of the present invention there is provided a method of securing an end fitting to an end of a hose having an outer braid and a plastic liner, the method including the steps of:-
i) providing a hollow end fitting for a hose, the end fitting having a spigot and a sealing face;
ii) inserting the spigot of the end fitting between the braid and the liner and bring the liner end through said hollow end fitting and flaring out the liner end to form a plastic sealing face;
iii) processing the assembly so formed in such a manner as to cause the flared liner end to form a shape which includes a bead on the liner surface in a direction extending from the end fitting and which has its inside edge squared off.

The bead is preferably concentric and allows the rubber seal previously used to be dispensed with.

The face of the end fitting may or may not have a bead machined in it as described more fully hereinafter.

This end fitting preferably comprises a PTFE lined end fitting, in which the PTFE hose liner is passed through the bore of the end fitting, and is then flared out.

This flared out portion may then be hot formed, e.g. by pressing with a heated tool, in order to form a shape which includes a "bead" of PTFE, and has the inside edge squared off. This bead can be either formed with or without a corresponding bead machined in to the face of the steel.

The differences of the fitting of the invention over that disclosed in our above mentioned European patent are:-
1. the steel flange behind the PTFE is thicker by the thickness of the rubber seal, so as to produce an overall thickness of fitting in which the rubber seal is no longer required; and
2. the hot forming produces a bead, instead of a pocket for the bead on the rubber seal to sit in.

Thus, the end fitting (typically a steel end fitting) applied in accordance with the invention may be located concentrically with a standard conventional end fitting having a similar groove in its sealing face without using a conventional resilient rubber seal having annular beads on each sealing face which are received within the annular grooves in the plastic liner and the sealing face of the conventional end fitting respectively. The two end fittings may then be clamped together to form a sealed connection.

The processing step also preferably results in the liner assuming a square internal corner where it goes into the flared sealing face, thus avoiding any entrapment zone.

Conveniently, the processing step (iii) recited above is a hot coining process which causes the plastic liner to assume the shape of the rubber seal.

The clamping system used would typically be a clamp ring which presses the two end fittings together.

According to a second aspect of the present invention, there is provided a plastic lined hose having secured to an end thereof a hollow end fitting having a spigot and a sealing face, wherein the spigot is located between the braid and the liner of the hose, and the liner end passes through the end fitting and is flared out to form a plastic sealing face overlying the sealing face of the end fitting to form a shape which includes a bead on the liner surface in a direction extending from the end fitting and which has its inside edge squared off.

The hot-formed face of the of the seal includes a bead to ensure concentric location of the jointed component, and provides a squared-off inside edge to eliminate an entrapment zone. Also, because the sealing surface of PTFE has been hot-formed flat and smooth, it has been discovered that the clamping force needed to make an effective seal against internal pressure is much lower, and is within acceptable limits required by users who are used to the clamping forces necessary for rubber seals.

Another advantage of the invention over any design which inorporates a seal, whether rubber or PTFE, is that there is only one sealing surface, not two, thereby halving the opportunities for leakage.

The invention will be described further, by way of example, with reference to the accompanying drawings, in which:
Figure 1 illustrates a conventional method of attaching a hose with an end fitting to a pipe with a conventional end fitting;
Figure 2 illustrates a different conventional method of attaching a hose with a plastic lined and flared end fitting to a pipe with a conventional end fitting;
Figure 3 illustrates an end fitting and method of securing the same in accordance with European Patent publication no. 0707170; and
Figures 4a and 4b are similar views to Figure 3 showing two embodiments of the method and joint of the present invention.

Referring to the drawings, and in particular Figure 1, an end fitting 10 is conventionally applied to the end of a hose 12 (which may comprise an outer layer 12a, normally a comprising a braid, and an inner layer 12b), by inserting the spigot end 10a inside the liner 12b and clamping the end fitting 10 to another end fitting 14 using a clamp ring 16 to press the two seal faces 10b,14b together against a rubber seal 15. The seal 15 has two annular beads 15b extending outwardly from the seal faces, and these two beads 15b are received inside grooves 10c, 14c in the respective end fittings, thus acting as a guide to concentric alignment. This arrangement creates an entrapment zone 17 between the liner 12b and the end of the spigot 10a, in which debris may collect.

Turning now to Figure 2, an arrangement known as a "flared plastic lined end" is illustrated, in which the liner 12b is pulled through the hollow end fitting 10 and flared out to form a seal between the two faces 10b,14b of the two end fittings. This seal can then be clamped, again using a clamp ring 16. This avoids the entrapment zone problem with the construction shown above, but is difficult to align correctly and to clamp using the conventional clamp ring 16 owing to the higher sealing force required. Also, another entrapment zone 17 is created between the liner 12b and the sealing face 14b of the mating end fitting 14.

The construction illustrated in Figure 3 overcomes the above difficulties by providing a modified end fitting 20 in which the whole of the sealing face of the end fitting is machined back, and the groove 20c re-formed or enlarged. The flared end of the plastic liner 13b is then "hot coined" to cause it to mould itself into and assume the shape of the underlying recess face of the end fitting 20, including the groove 20c.

Thus, the face of the end fitting 20 is still lined with plastic material, for example, PTFE, as with the prior embodiment illustrated in Figure 2, but also includes in that lined face a groove 13c formed in the liner 13b to receive the annular bead of a rubber seal 22. Thus, the end fitting 20 can be clamped to a conventional end fitting 14 using a conventional clamp ring 16 and conventional rubber seal 22.

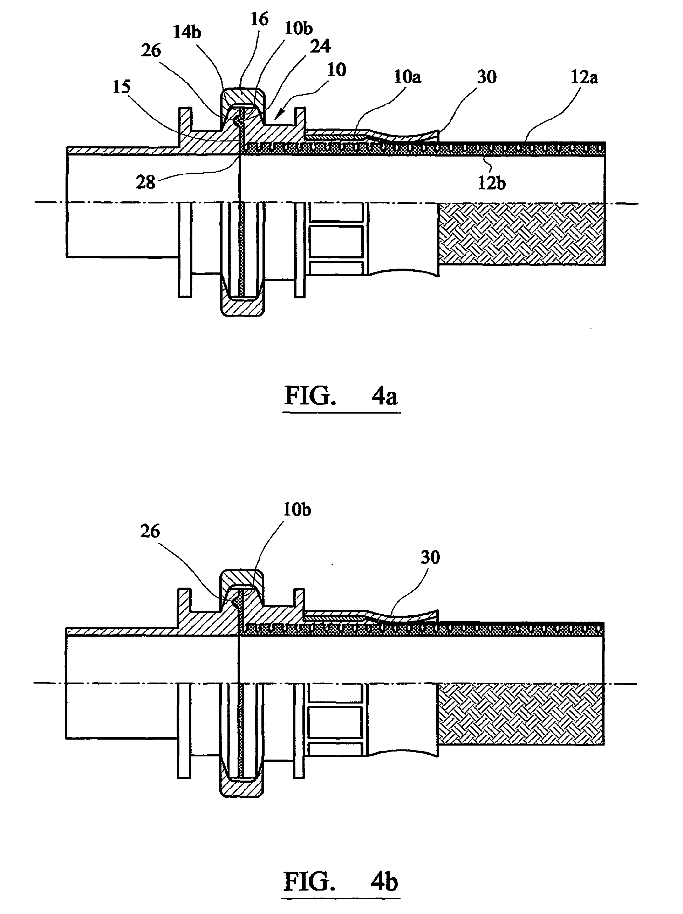

Turning now to Figure 4a and using like numbers for like parts, the hose and seal arrangement in accordance with the invention is illustrated, in which the end face 10b of the end fitting 10 is machined with a concentric bead 24 machined therein. The liner 12b is pulled through the hollow end fitting 10 as before and flared out. The flared out portion is then hot formed by pressing with a heated tool in order to form a shape which includes a bead 26 of PTFE, and has the inside edge 28 squared off. The outer layer 12a, being a braid reinforcement, is passed over the top of the spigot 10a and locked thereto by crimping an external ferrule 30 radially inwards to squeeze and hold the braid permanently to the spigot.

The end fitting 10 is modified in that the steel flange behind the PTFE 15 is thicker by the thickness of the rubber seal which would otherwise be provided so as to produce an overall thickness of fitting in which the rubber seal is no longer required. The bead 26 takes the place of the bead of the rubber seal 15.

Turning now to Figure 4b, the construction of this embodiment is identical, except that the machined bead 24 is omitted, the surface 10b being flat. This therefore means that the PTFE bead 26 is solid rather than hollow as in the construction of Figure 4a.

The end fitting of the invention provides a simple, inexpensive and effective way of producing a seal with a PTFE lined pipe fitting wherein entrapment zones are eliminated and the clamping forces required are not excessive.

## Claims

1. A method of securing an end fitting (10) to an end of a hose (12) having an outer braid (12a) and a plastic liner (12b), the method including the steps of:-
i) providing a hollow end fitting (10) for a hose (12), the end fitting having a spigot (10a) and a sealing face (10b);
ii) inserting the spigot (10a) of the end fitting (10) between the braid (12a) and the liner (12b) and bring the liner end through said hollow end fitting (10) and flaring out the liner end to form a plastic sealing face;
iii) processing the assembly so formed in such a manner as to cause the flared liner end to form a shape which includes a bead (26) on the liner surface in a direction extending from the end fitting (10) and which has its inside edge (28) squared off.

2. A method as claimed in claim 1 wherein the bead (26) is concentric and allows the rubber seal previously used to be dispensed with.

3. A method as claimed in either of claims 1 or 2 wherein the end fitting (10) comprises a PTFE lined end fitting, in which the PTFE hose liner is passed through the bore of the end fitting, and is then flared out.

4. A method as claimed in claim 3 wherein the flared out portion is then hot formed, e.g. by pressing with a heated tool, in order to form a shape which includes a bead of PTFE, and has the inside edge squared off.

5. A method as claimed in claim 4 wherein the bead (26) is formed with a corresponding bead (24) machined in to the face of the steel.

6. A method as claimed in claim 4 wherein the bead (26) is formed without a corresponding bead machined in to the face of the steel.

7. A method as claimed in any of claims 1 to 6 wherein the processing step (iii) also results in the liner assuming a square internal corner (28) where it goes into the flared sealing face, thus avoiding any entrapment zone.

8. A method as claimed in any of claims 1 to 7 wherein step (iii) is a hot coining process which causes the plastic liner to assume the shape of the rubber seal.

9. A plastic lined hose (12) having secured to an end thereof a hollow end fitting (10) having a spigot (10a) and a sealing face (10b), wherein the spigot is located between the braid (12a) and the liner (12b) of the hose (12), and the liner end passes through the end fitting (10) and is flared out to form a plastic sealing face overlying the sealing face of the end fitting (10) to form a shape which includes a bead (26) on the liner surface in a direction extending from the end fitting (10) and which has its inside edge (28) squared off.

10. A hose as claimed in claim 9 wherein the face of the of the seal includes a bead to ensure concentric location of the jointed component, and provides a squared-off inside edge to eliminate an entrapment zone.

## Patentansprüche

1. Verfahren zum Befestigen eines Anschlussstücks (10) an ein am Ende eines Schlauchs (12), der ein äußeres Geflecht (12a) und eine Kunststoffinnenlage (12b) aufweist, wobei das Verfahren die Schritte umfasst:
i) Bereitstellen eines hohlen Anschlussstücks (10) für einen Schlauch (12), wobei das Anschlussstück einen Zapfen (10a) und eine Dichtungsfläche (10b) aufweist;
ii) Einführen des Zapfens (10a) des Anschlussstücks (10) zwischen dem Geflecht (12a) und der Innenlage (12b) und Durchführen des Innenlagenendes durch das hohle Anschlussstück (10) und Aufweiten des Innenlagenendes, um eine Kunststoffdichtungsfläche zu bilden;
iii) Bearbeiten der so gebildeten Anordnung derart, dass das aufgeweitete Innenlagenende eine Form bildet, welche einen Wulst (26) auf der Oberfläche der Innenlage in einer Richtung, die sich von dem Anschlussstück (10) erstreckt, umfasst, und welche eine rechtwinklige Innenkante aufweist.

2. Verfahren nach Anspruch 1, wobei der Wulst (26) konzentrisch ist und es ermöglicht, die vorher verwendete Gummidichtung zu entbehren.

3. Verfahren nach Anspruch 1 oder 2, wobei das Anschlussstück (10) ein PTFE-ausgekleidetes Anschlussstück umfasst, in welches die PTFE-Schlauchinnenlage durch die Bohrung des Anschlussstücks hindurchgeführt wird und dann aufgeweitet wird.

4. Verfahren nach Anspruch 3, wobei der aufgeweitete Bereich dann warmgeformt wird, zum Beispiel durch Drücken mit einem erwärmten Werkzeug, um eine Form zu bilden, welche einen Wulst aus PTFE umfasst, und eine rechtwinklige Innenkante aufweist.

5. Verfahren nach Anspruch 4, wobei der Wulst (26) mit einem entsprechenden Wulst (24) gebildet wird, der in die Fläche des Stahls gearbeitet wurde.

6. Verfahren nach Anspruch 4, wobei der Wulst (26) ohne einen entsprechenden Wulst gebildet wird, der in die Fläche des Stahls gearbeitet wurde.

7. Verfahren nach einem der Ansprüche 1-6, wobei der Verarbeitungsschritt (iii) auch darin resultiert, dass die Innenlage eine rechtwinklige innere Ecke (28) annimmt, wo sie in die aufgeweitete Dichtungsfläche übergeht, wobei somit ein Einschlussbereich vermieden wird.

8. Verfahren nach einem der Ansprüche 1-7, wobei Schritt (iii) ein Warmprägeverfahren ist, welches die Kunststoffinnenlage veranlasst, die Form der Gummidichtung anzunehmen.

9. Schlauch (12) mit Kunststoffinnenlage, der ein an einem Ende befestigtes hohles Anschlussstück (10) aufweist, das einen Zapfen (10a) und eine Dichtungsfläche (10b) aufweist, wobei sich der Zapfen zwischen dem Geflecht (12a) und der Innenlage (12b) des Schlauchs (12) befindet, und das Innenlagenende durch das Anschlussstück (10) hindurchführt und aufgeweitet ist, um eine Kunststoffdichtungsfläche zu bilden, die auf der Dichtungsfläche des Anschlussstücks (10) aufliegt, um eine Form zu bilden, welche einen Wulst (26) auf der Innenlagenoberfläche in einer Richtung, die sich von dem Anschlussstück (10) erstreckt, umfasst, und welche eine rechtwinklige Innenkante (28) aufweist.

10. Schlauch nach Anspruch 9, wobei die Fläche der Dichtung einen Wulst umfasst, um eine konzentrische Anordnung der zusammengefügten Komponente sicherzustellen, und eine rechtwinklige Innenkante bereitstellt, um einen Einschlussbereich zu eliminieren.

## Revendications

1. Procédé de fixation d'un raccord d'extrémité (10) à une extrémité d'un tuyau souple (12) possédant une tresse externe (12a) et un revêtement en matière plastique (12b), ledit procédé comprenant les étapes suivantes :
i) prévision d'un raccord d'extrémité creux (10) pour un tuyau souple (12), le raccord d'extrémité possédant un bout uni (10a) et une face d'étanchéité (10b) ;
ii) insertion du bout uni (10a) du raccord d'extrémité (10) entre la tresse (12a) et le revêtement (12b), le passage du revêtement à travers ledit raccord d'extrémité creux (10) et l'évasement vers l'extérieur de l'extrémité de revêtement pour former une face d'étanchéité en matière plastique ;
iii) traitement de l'ensemble ainsi formé de façon à amener l'extrémité évasée de revêtement à adopter une forme comprenant une nervure (26) sur la surface de revêtement dans une direction s'étendant à partir du raccord d'extrémité (10) et qui voit son bord intérieur (28) à angle droit.

2. Procédé selon la revendication 1, selon lequel la nervure (26) est concentrique et permet la non-utilisation du joint d'étanchéité en caoutchouc pécédemment utilisé.

3. Procédé selon l'une des revendications 1 ou 2, selon lequel le raccord d'extrémité (10) comprend un raccord d'extrémité avec un revêtement de PTFE, dans lequel le revêtement de tuyau souple en PTFE est passé à travers l'alésage du raccord d'extrémité puis est évasé vers l'extérieur.

4. Procédé selon la revendication 3, selon lequel la partie évasée vers l'extérieur est alors formée à chaud, par exemple par pressage à l'aide d'un outil chauffé, de façon à adopter une forme comprenant une nervure de PTFE, et possède son bord intérieur à angle droit.

5. Procédé selon la revendication 4, selon lequel la nervure (26) est formée avec une nervure correspondante (24) usinée dans la face de l'acier.

6. Procédé selon la revendication 4, selon lequel la nervure (26) est formée sans nervure correspondante usinée dans la face de l'acier.

7. Procédé selon l'une quelconque des revendications 1 à 6, selon lequel l'étape de traitement (iii) entraîne, de même, le revêtement à présenter une coin interne carré (28) où il passe dans la face évasée d'étanchéité, évitant ainsi toute zone de piégeage.

8. Procédé selon l'une des revendications 1 à 7, selon lequel l'étape (iii) est un processus de calibrage à chaud entraînant le revêtement en matière plastique à adopter la forme du joint d'étanchéité en caoutchouc.

9. Tuyau souple à revêtement en matière plastique (12) possédant un raccord d'extrémité creux (10) fixé à une de ses extrémités, muni d'un bout uni (10a) et d'une face d'étanchéité (10b), dans lequel le bout uni est positionné entre la tresse (12a) et le revêtement (12b) du tuyau souple (12) et l'extrémité de revêtement traverse le raccord d'extrémité (10) et est évasée vers l'extérieur pour former une face d'étanchéité en matière plastique recouvrant la face d'étanchéité du raccord d'extrémité (10) pour adopter une forme comprenant une nervure (26) sur la surface de revêtement dans une direction s'étendant à partir du raccord d'extrémité (10) et qui voit son bord intérieur (28) à angle droit.

10. Tuyau souple selon la revendication 9, dans lequel la face du joint d'étanchéité comprend une nervure pour assurer un positionnement concentrique du composant abouté, et présente un bord intérieur à angle droit pour éliminer une zone de piégeage.
